(19) Europäisches Patentamt
European Patent Office
Office européen des brevets

(11) Publication number: 0 299 488 B1

(12) **EUROPEAN PATENT SPECIFICATION**

(45) Date of publication of patent specification: **18.03.92** (51) Int. Cl.[5]: **C01B 33/04**

(21) Application number: **88111346.8**

(22) Date of filing: **14.07.88**

# (54) Removal of arsine and phosphine from silane.

(30) Priority: **15.07.87 US 73536**

(43) Date of publication of application:
**18.01.89 Bulletin 89/03**

(45) Publication of the grant of the patent:
**18.03.92 Bulletin 92/12**

(84) Designated Contracting States:
**BE ES FR GB IT NL**

(56) References cited:
**US-A- 4 537 759**
**US-A- 4 603 148**
**US-A- 4 604 270**

(73) Proprietor: **HERCULES INCORPORATED**
**Hercules Plaza**
**Wilmington Delaware 19894(US)**

(72) Inventor: **Tom, Glenn McPherson**
**2 Power Horn Land**
**New Milford Connecticut 06776(US)**

(74) Representative: **Lederer, Franz, Dr. et al**
**Lederer, Keller & Riederer Patentanwälte**
**Lucile-Grahn-Strasse 22**
**W-8000 München 80(DE)**

**EP 0 299 488 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a new use for a metalated macroreticulate, i.e., porous polymer.

High purity silane is essential to the manufacture of certain high performance semiconductor silicon materials such as polysilicon, silicon nitride and epitaxial silicon. Group VA hydrides, such as arsine and phosphine, represent particularly undesirable impurities because they act as n-type dopants in silicon. Since arsine and phosphine are common contaminants in silane, which is used in the preparation of the silicon materials mentioned above, removal of arsine and phosphine is essential in applications where the presence of even small amounts of dopants is undesirable.

Several methods exist for the removal of Group VA hydrides from silane. For example, U.S. patent No. 4,537,759 discloses a process for removing impurities such as arsine and phosphine from silane. The impure silane gas is injected as a series of timed, spaced pulses into a carrier gas stream that transports the silane pulses through a gas chromatographic column. The components of each pulse are differentially retarded by the column packing, which may be a porous polymer such as styrene-divinylbenzene. The components therefore exit at different but precisely spaced time intervals. This method requires careful monitoring of the pulsed injection rates, and requires expensive, complex equipment. Other known methods also require extensive monitoring and tend to be energy intensive.

A method is known for removing impurities from fluids such as silane that would be much more desirable than the method described above. For example, U.S. patent No. 4,604,270 describes contacting the fluid with a metalated macroreticulate polymer to remove impurities entirely unrelated to arsine and phosphine, namely Lewis acids and oxidants. This patent does not suggest the use of the metalated polymer to remove arsine and phosphine from silane.

According to the invention, a metalated macroreticulate polymer having a plurality of pendant functional groups or a mixture of functional groups corresponding to the general formula:

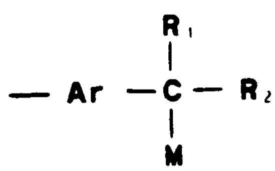

and having within its pores 1-12 carbon alkyl compound of M or a hydride of M or both, is used to to remove arsine or phosphine from silane gas by contacting the gas with the polymer. Ar is any aromatic hydrocarbon radical containing from one to three rings, such as phenylene, naphthylene, anthracene, fluorenylene and the like; $R_1$ and $R_2$ are the same or different and can be hydrogen or alkyl hydrocarbon radicals having from 1-12 carbon atoms; and M is lithium, sodium or potassium.

Suitable alkyl hydrocarbon radicals include methyl, ethyl, and the various isomers of propyl, butyl, pentyl, hexyl, octyl, decyl and dodecyl.

Phenylene is the preferred aromatic hydrocarbon radical.

In contrast to prior art methods for the removal of Group VA hydrides from silane, the new use of metalated macroreticulate polymers according to the invention requires little monitoring during use and avoids any intensive use of energy.

Arsine and phosphine can be removed from gas streams either consisting primarily of silane or from gas mixtures containing other gases and silane. In such mixtures, the other gases are those that are essentially inert to the metalated macroreticulate polymer, including hydrogen, nitrogen, helium, argon, xenon, neon and krypton. Removal of arsine and phosphine from silane/ammonia mixtures is also within the scope of the invention. Arsine and phosphine are removed from the gas to be purified to levels below 0.3 ppm, which is the detection limit of conventional analytical equipment.

Removal of arsine and phosphine can be accomplished at a temperature of -15 °C to 100 °C, preferably at a temperature of from about 0 °C to about 50 °C. In the most preferred embodiment the temperature is from about 0 °C to about 30 °C. The pressure used can be from sub-atmospheric to about 6894 k Pa (gauge pressure), preferably from about 0 to about 689 k Pa. Most preferably the pressure is from about 34.5 to about 165.5 k Pa.

The preferred flow rate of the gas to be purified through the bed of metalated macroreticulate polymer is a function of the size of the bed, i.e., the larger the bed, the larger the flow rate. Space velocity can be used to specify the flow rate without specifying the size of the bed. Space velocity is defined as volumetric flow rate divided by the volume of the metalated macroreticulate polymer. Space velocities up to 6000 $hr^{-1}$

can be used. Preferably space velocities of 1400 $hr^{-1}$ or less are used.

The metalated macroreticulate polymer can be contained in any device comprising a chamber that is impermeable to the gas to be purified and has an inlet port and an outlet port to allow the impure gas to enter and the purified gas to exit. Such devices include packed bed columns and fluid beds. The flow through a packed bed can be up-flow or down-flow. The device containing the metalated macroreticulate polymer can incorporate filters to ensure that no particulate material will emerge from the bed. The optimal size and configuration of a device for a particular use can be readily determined by one skilled in the art.

The macroreticulate polymers that are used as the starting material for the metalated polymers have a pore size of 1-1000 nanometers, preferably 5-10 nanometers. These polymers have pendant aromatic vinyl groups or pendant aromatic groups having ionizable protons at the alpha carbon atom. Examples of the macroreticulate polymers that can be metalated are copolymers of styrene, vinyltoluene, vinylisopropylbenzene, vinylnaphthalene, alpha-methylstyrene and beta-methylstyrene or mixtures of such monomers, with one or more crosslinking agents such as divinylbenzene or divinylnaphthalene. The preferred macroreticulate polymer is commercially available macroreticulate poly(styrene-divinylbenzene).

The macroreticulate polymer is metalated by contacting with a stoichiometric excess of a solution containing an alkyl compound of lithium, sodium or potassium, where the alkyl group is a 1-12 carbon alkyl group. Normal-butyllithium is preferred. Typical solvents for the metal alkyl compound include aliphatic hydrocarbons, aromatic hydrocarbons and ethers. The metalation is carried out at ambient temperature and pressure. The contact time is not critical, and typically may be in the range of from about 10 minutes to about 10 hours. Because an excess of the metalating agent is used, unreacted metalating agent remains within the pores of the macroreticulate polymer. The unreacted reagent is believed to be strongly bound in clusters to the metal immobilized in the functional groups on the polymer. The preparation of the metalated macroreticulate polymer is well known, for instance from U.S. patents 4,603,148 and 4,604,270.

Since small amounts of low molecular weight hydrocarbons have occasionally been found in the off-gas of the metalated macroreticulate polymer, it is preferable to subject the polymer to a thermal ageing process before using it in applications where the emission of hydrocarbons would not be acceptable. The thermal ageing process involves heating the polymer at a high temperature, preferably from about 140 °C to about 250 °C, for several hours, preferably more than six hours. Depending upon the time and temperature used, some or all of the unreacted metal alkyl compound in the pores of the polymer is thus decomposed to form the corresponding metal hydride. The thermal ageing is carried out in such a manner that the gaseous reaction products can be removed either under vacuum or under an inert gas purge to prevent undesirable side reactions.

The following examples illustrate the new use according to the invention of the metalated macroreticulate polymers.

Example 1

Amberlite XAD4, a macroreticulate styrene-divinylbenzene copolymer manufactured by Rohm and Haas, is washed with three bed volumes of water, then methanol, then isopropanol and finally hexane. One bed volume is equal to the volume of the unfilled bed. The polymer is placed in a reaction vessel and dried for about two hours under a stream of nitrogen at 120 °C. The reaction vessel is then flooded with 1.6 M n-butyllithium and the solvent is removed under a nitrogen stream at 65 °C. The polymer is washed quickly with 2-4 bed volumes of hexane to remove surface n-butyllithium and dried at 120 °C for 16 hours. The metalated macroreticulate polymer is then aged by heating under a stream of nitrogen at 210 °C (wall temperature of reactor) for 12 hours.

A mixture of phosphine and silane in helium is prepared by blending a 200 ppm mixture of phosphine in helium with a 200 ppm mixture of silane in helium. Nominal flow rates are 90 cc/min of the silane/helium mixture and 10 cc/min of the phosphine/helium mixture. The gas mixture is allowed to blend for 45 minutes to reach a steady state. A sample of the gas mixture is collected in a 30 cc stainless steel sample cylinder. This sample is analyzed for silane and phosphine concentration by gas chromatography (G.C.) using a mass spectrometer as the detector. The results are shown in Table 1. The metalated macroreticulate polymer prepared as described above is purged with helium and the gas mixture is then passed through a 1 cc sample of the polymer. After 30 minutes, a gas sample is collected downstream of the metalated macroreticulate polymer. The sample is analyzed by G.C./mass spectroscopy. As shown in Table 1, the phosphine is reduced from 5 ppm to below the detection limit of 0.3 ppm.

TABLE 1

| Component | Feed | Outlet |
|---|---|---|
| $PH_3$ | 5 ppm | <0.3 ppm |
| $SiH_4$ | 220 ppm | 180 ppm |
| Helium | balance | balance |
| Total flow rate = 100 cc/min<br>Space velocity = 6000 $hr^{-1}$ | | |

Example 2

A mixture of arsine, phosphine and silane is prepared by blending 200 ppm mixtures of the appropriate gases in helium. Nominal flow rates are: silane/helium mixture, 70 cc/min; arsine/helium mixture, 10 cc/min; phosphine/helium mixture 10 cc/min; helium, 10 cc/min. This mixture is allowed to blend for 45 minutes to come to a steady state. The gas mixture is then directed through an assembly consisting of two sample cylinders on either side of a 1 cc tube containing the metalated macroreticulate polymer, prepared as described in Example 1, and purged with helium. This experimental arrangement allows collection of the inlet and outlet samples simultaneously. Inlet and outlet samples are collected after 20 minutes and analyzed by G.C./mass spectroscopy. The results are shown in Table 2. Initial arsine and phosphine levels are reduced from about 5 ppm to below the detection limit of 0.3 ppm.

TABLE 2

| Component | Feed | Outlet |
|---|---|---|
| $PH_3$ | 5 ppm | <0.3 ppm |
| $AsH_3$ | 6 ppm | <0.3 ppm |
| $SiH_4$ | 150 ppm | 117 ppm |
| Helium | balance | balance |
| Total flow rate = 100 cc/min<br>Space velocity = 6000 $hr^{-1}$ | | |

## Claims

1. Use of a metalated macroreticulate polymer to remove arsine and phosphine impurities from silane gas by contacting the gas with the polymer, the polymer having a plurality of pendant functional groups or a mixture of functional groups corresponding to the general formula:

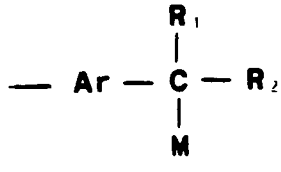

and having within its pores a 1-12 carbon alkyl compound of M or a hydride of M or both, Ar being any aromatic hydrocarbon radical containing from one to three rings, $R_1$ and $R_2$ being the same or different and selected from hydrogen and alkyl hydrocarbon radicals having from 1-12 carbon atoms, and M being lithium, sodium or potassium.

2. Use of the metalated macroreticulate polymer as claimed in claim 1, characterized in that M is lithium.

3. Use of the metalated macroreticulate polymer as claimed in claim 1 or 2, further characterized in that

$R_1$ is H and $R_2$ is pentyl.

**4.** Use of the metalated macroreticulate polymer as claimed in claim 1 or 2, further characterized in that the metalated macroreticulate polymer is a styrene-divinylbenzene copolymer.

**5.** Use of the metalated macroreticulate polymer as claimed in claim 1 or 2, further characterized in that the contacting of the gas with the polymer is carried out at a temperature of -15 °C to 100 °C.

**6.** Use of the metalated macroreticulate polymer as claimed in claim 1 or 2, further characterized in that the contacting of the gas with the polymer is carried out at a temperature of 0 °C to about 50 °C.

**7.** Use of the metalated macroreticulate polymer as claimed in claim 1 or 2, further characterized in that the contacting of the gas with the polymer is carried out at a space velocity of 6000 $hr^{-1}$ or less.

**8.** Use of the metalated macroreticulate polymer as claimed in claim 1 or 2, further characterized in that the contacting of the gas with the polymer is carried out at a space velocity of 1400 $hr^{-1}$ or less.

**Revendications**

**1.** Utilisation d'un polymère macroréticulaire métallé pour éliminer les impuretés de type arsine et phosphine à partir de silane gazeux, par mise en contact du gaz avec le polymère, le polymère comportant une pluralité de groupes fonctionnels latéraux ou un mélange de groupes fonctionnels correspondant à la formule générale

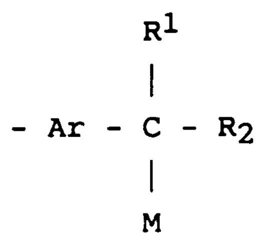

et ayant dans ses pores un composé (alkyl à 1-12 atomes de carbone)-métallique de M ou un hydrure de M ou les deux, Ar étant un radical hydrocarboné aromatique quelconque contenant de 1 à 3 cycles, $R_1$ et $R_2$ étant identiques ou différents et étant choisis parmi l'hydrogène et les radicaux hydrocarbonés alkyle ayant 1 à 12 atomes de carbone, M étant le lithium, le sodium ou le potassium.

**2.** Utilisation du polymère macroréticulaire métallé selon la revendication 1, caractérisé en ce que M est le lithium.

**3.** Utilisation du polymère macroréticulaire métallé selon la revendication 1 ou 2, caractérisé en outre en ce que $R_1$ est H et $R_2$ est le radical pentyle.

**4.** Utilisation du polymère macroréticulaire métallé selon la revendication 1 ou 2, caractérisé en outre en ce que le polymère macroréticulaire métallé est un copolymère de styrène/divinylbenzène.

**5.** Utilisation du polymère macroréticulaire métallé selon la revendication 1 ou 2, caractérisé en outre en ce que le contact du gaz avec le polymère est mis en oeuvre à une température de -15 à 100 °C.

**6.** Utilisation du polymère macroréticulaire métallé selon la revendication 1 ou 2, caractérisé en outre en ce que le contact du gaz avec le polymère est mis en oeuvre à une température de 0 à environ 50 °C.

**7.** Utilisation du polymère macroréticulaire métallé selon la revendication 1 ou 2, caractérisé en outre en ce que le contact du gaz avec le polymère est mis en oeuvre à une vitesse spatiale de 6000 $h^{-1}$ ou moins.

**8.** Utilisation du polymère macroréticulaire métallé selon la revendication 1 ou 2, caractérisé en outre en

ce que le contact du gaz avec le polymère est mis en oeuvre à une vitesse spatiale de 1400 $h^{-1}$ ou moins.

**Patentansprüche**

1. Verwendung eines metallierten grobvernetzten Polymers zur Entfernung von Arsenwasserstoff- und Phosphin-Verunreinigungen von Silangas durch In-Kontakt-bringen des Gases mit dem Polymer, wobei das Polymer eine Anzahl funktioneller Seitengruppen oder ein Gemisch aus funktionellen Gruppen hat, entsprechend der allgemeinen Formel

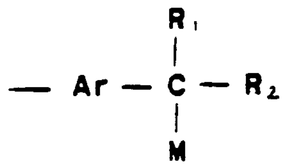

und, das in seinen Poren eine Aklylverbindung mit 1-12 Kohlenstoffatomen von M oder ein Hydrid von M oder beides hat, wobei Ar ein beliebiger aromatischer Kohlenwasserstoffrest ist, der 1 bis 3 Ringe enthält, $R_1$ und $R_2$ gleich oder verschieden sind und ausgewählt sind aus Wasserstoff und Alkylkohlenwasserstoffresten mit 1 bis 12 Kohlenstoffatomen, und wobei M Lithium, Natrium oder Kalium ist.

2. Verwendung des metallierten grobvernetzten Polymers nach Anspruch 1, dadurch gekennzeichnet, daß M Lithium ist.

3. Verwendung des metallierten grobvernetzten Polymers nach Anspruch 1 oder 2, weiter dadurch gekennzeichnet, daß $R_1$ H und $R_2$ Pentyl ist.

4. Verwendung des metallierten grobvernetzten Polymers nach Anspruch 1 oder 2, weiter dadurch gekennzeichnet, daß das metallierte grobvernetzte Polymer ein Styrol-Divinylbenzol-Copolymer ist.

5. Verwendung des metallierten grobvernetzten Polymers nach Anspruch 1 oder 2, weiter dadurch gekennzeichnet, daß das In-Kontakt-bringen des Gases mit dem Polymer bei einer Temperatur von -15 °C bis 100 °C ausgeführt wird.

6. Verwendung des metallierten grobvernetzten Polymers nach Anspruch 1 oder 2, weiter dadurch gekennzeichnet, das das In-Kontakt-bringen des Gases mit dem Polymer bei einer Temperatur von 0 °C bis etwa 50 °C ausgeführt wird.

7. Verwendung des metallierten grobvernetzten Polymers nach Anspruch 1 oder 2, weiter dadurch gekennzeichnet, daß das In-Kontakt-bringen des Gases mit dem Polymer bei einer Raumgeschwindigkeit von 6000 $hr^{-1}$ oder weniger ausgeführt wird.

8. Verwendung des metallierten grobvernetzten Polymers nach Anspruch 1 oder 2, weiter dadurch gekennzeichnet, das das In-Kontakt-bringen des Gases mit dem Polymer bei einer Raumgeschwindigkeit von 1400 $hr^{-1}$ oder weniger ausgeführt wird.